# FASCICULE DE BREVET EUROPEEN

(11) **EP 1 664 744 B1**
(45) Date de publication et mention de la délivrance du brevet: **04.09.2013**
(21) Numéro de dépôt: 04787434.2
(22) Date de dépôt: 24.09.2004
(51) Int. Cl.: G01N 21/47, G01N 15/02, G01P 5/00, G01P 3/36

(54) **PROCEDE ET DISPOSITIF D'ANALYSE DU MOUVEMENT DANS UN MILIEU DIFFUSANT**
VERFAHREN UND VORRICHTUNG ZUR ANALYSE DER BEWEGUNG IN EINEM STREUENDEN MEDIUM
METHOD AND DEVICE FOR THE ANALYSIS OF MOVEMENT IN A SCATTERING MEDIUM

(30) Priorité: 25.09.2003 FR 0311218
(43) Date de publication de la demande: 07.06.2006
(73) Titulaire: Formulaction, 31240 L'Union (FR)
(72) Inventeur: SNABRE, Patrick, F-33170 Gradignan (FR); BRUNEL, Laurent, F-26380 Peyrins (FR)
(74) Mandataire: Hartmann, Jean-Luc
(86) Numéro de dépôt international: PCT/FR2004/002408
(87) Numéro de publication internationale: WO 2005/031324

(56) Documents cités:
- EP-A- 1 209 443
- WO-A-02/103332
- SCHEFFOLD F, HÄRTL W, MARET G AND MATIJEVIC E: "Observation of Long-Range Correlations in Temporal Intensity Fluctuations of Light" PHYSICAL REVIEW B, vol. 56, no. 17, 1 novembre 1997 (1997-11-01), pages 10942-10952, XP002319585 USA
- ARHALIASS A ET AL: "MULTIPLE LIGHT SCATTERING IN RANDOM SYSTEMS: ANALYSIS OF THE BACKSCATTERING SPOT IMAGE" EUROPEAN PHYSICAL JOURNAL APPLIED PHYSICS, EDP SCIENCES, LES ULIS, FR, vol. 6, no. 1, avril 1999 (1999-04), pages 81-87, XP000893623 ISSN: 1286-0042
- YEUNG F, LEVINSON S F AND PARKER K J: "Multilevel and Motion Model-Based Ultrasonic Speckle Tracking Algorithms" ULTRASOUND IN MED. AND BIOL., vol. 24, no. 3, 1998, pages 427-441, XP002319584 USA
- GIGLIO M ET AL: "Space Intensity Correlations in the Near Field of the Scattered Light: A Direct Measurement of the Density Correlation Function g(r)" PHYSICAL REVIEW LETTERS, NEW YORK,NY, US, vol. 85, no. 7, 14 août 2000 (2000-08-14), pages 1416-1419, XP002225445 ISSN: 0031-9007
- BOHS L N ET AL: "A NOVEL METHOD FOR ANGLE INDEPENDENT ULTRASONIC IMAGING OF BLOOD FLOW AND TISSUE MOTION", IEEE TRANSACTIONS ON BIOMEDICAL ENGINEERING, IEEE SERVICE CENTER, PISCATAWAY, NJ, USA, vol. 38, no. 3, 1 March 1991 (1991-03-01), pages 280-286, XP000229938, ISSN: 0018-9294, DOI: 10.1109/10.133210

## Description

La présente invention se rapporte à un procédé d'analyse du mouvement dans un milieu diffusant, ainsi qu'à un dispositif permettant une mise en oeuvre dudit procédé.

De tels procédé et dispositif sont connus dans l'art antérieur. On connaît notamment de la demanderesse des procédés et dispositifs pour l'analyse des phases d'un mélange polyphasique, permettant notamment la détection et la mesure de phénomènes naissants de démixtion, de sédimentation dans des mélanges en fonction du temps, par exemple des émulsions ou des suspensions. Les domaines d'application de ces procédés et dispositifs comprennent en particulier l'industrie chimique et para-chimique, et plus largement tous les domaines pour lesquels il est nécessaire d'analyser la structure ainsi que la stabilité d'un mélange polyphasique ou de déceler la structure d'un mélange ou plus largement d'un milieu diffusant. Le dispositif d'analyse des phases du mélange comprend des moyens de détection d'un rayonnement électromagnétique rétrodiffusé par le mélange par exemple comportant des photodiodes. De tels procédés et dispositifs bien que fonctionnant parfaitement, demandent un temps non négligeable pour l'acquisition des données nécessaire à l'analyse, et il arrive que ce temps puisse se révéler grand devant la vitesse d'évolution du milieu à analyser au point de limiter les applications de ces procédés et dispositifs.

La demanderesse à également mis au point des procédés et dispositifs permettant de mesurer un flux lumineux par exemple rétrodiffusé par un milieu diffusant sur un récepteur à partir de la tache de rétrodiffusion au moins en partie imagée sur les moyens de réception, généralement constitués d'un capteur matriciel, d'une caméra CCD, ou d'une caméra CMOS s'étendant par exemple sur une surface définie entre deux directions concourantes au barycentre lumineux de la tache de rétrodiffusion. De tels procédés et dispositifs permettent de mesurer un échantillonnage spatial d'un profil du flux lumineux dans la tache de rétrodiffusion ainsi obtenue. Dans ce cas également, un grand nombre d'acquisitions de données est nécessaire pour obtenir les mesures et les résultats qui en sont tirés.

Il existe également dans l'art antérieur des méthodes conventionnelles d'analyse du mouvement dans un milieu diffusant, à partir de l'étude de l'évolution au cours du temps du champ électromagnétique en un point de l'espace, représenté par un pixel, diffusé par le milieu diffusant sous l'effet de l'injection dans celui-ci d'une lumière cohérente. Le champ électromagnétique est échantillonné dans le temps en respectant le critère de Shannon, c'est à dire une fréquence d'échantillonnage au moins deux fois supérieure à la fréquence maximale du signal détecté. Si le nombre d'échantillons est suffisant, on peut extraire une fonction d'auto-corrélation temporelle avec une analyse de Fourier par exemple. Cela est en général assez long dans le cas de mouvements faibles dans le milieu diffusant, car pour réduire le bruit de mesure, il faut établir la moyenne des auto-corrélations successives. Donc, ces procédés et dispositifs nécessitent d'effectuer un grand nombre d'acquisitions et des moyennes pour obtenir une auto-corrélation ou un spectre de qualité suffisante.

On connaît le document EP 1 209 443 qui se rapporte à un procédé de prise d'image d'un motif à grains de speckle généré par une lumière réfléchie d'un faisceau laser, et d'analyse de coagulation ou de fusion, par utilisation d'un couple d'images comparées successivement, entre une image et l'image qui la précède immédiatement, afin de calculer un degré coïncidant de façon qu'un taux de séchage ou un taux de durcissement obtenu sur la base de ce degré coïncidant puisse être affiché.

On connaît également le document WO 02/103332 qui se rapporte à une méthode pour mesurer les propriétés de particules immergées dans un corps à partir d'un faisceau de lumière cohérente diffusée par les particules. La vitesse des particules peut être analysée à partir de la corrélation entre des paires d'images instantanées enregistrées à différents moments, en utilisant la transformée de Fourier et la fonction d'auto-corrélation des deux images de départ. Un tel procédé utilise l'analyse inter-corrélation d'images. Il présente l'inconvénient de devoir multiplier entre elles les valeurs des pixels de chaque image un à un, ce qui entraîne un temps de calcul non négligeable.

L'article de Bohs et Trahey, IEEE Transactions on Biomedical Engineering 38 (1991) March, No. 3, New York, US, pages 281-286 décrit une nouvelle méthode pour l'imagerie d'ultrasons.

La présente invention propose donc un procédé et un dispositif d'analyse du mouvement dans un milieu diffusant, permettant une analyse et acquisition plus rapide des données d'analyse.

Un autre objectif de la présente invention est de proposer des procédé et dispositif d'analyse du mouvement dans un milieu diffusant évoluant plus vite que l'acquisition des données d'analyse des procédé et dispositif de l'art antérieur.

Un autre objectif de la présente invention est de proposer des procédé et dispositif d'analyse du mouvement dans un milieu diffusant qui ne nécessitent pas un positionnement précis des éléments constitutifs, comme la source de lumière, le milieu à analyser, ou le capteur, les uns par rapport aux autres.

Plus précisément, l'invention se rapporte à un procédé de détection et d'analyse du mouvement dans un milieu diffusant selon l'objet de la revendication 1.

L'échantillonnage spatial et temporel du champ électromagnétique de la lumière diffusée par le milieu diffusant permet d'obtenir des images des grains de speckle représentatives en ce qui concerne l'échantillonnage spatial, à un instant déterminé, d'un état du milieu diffusant, et représentatives pour l'échantillonnage temporel, de l'évolution dans le temps du milieu diffusant, ce dernier étant le cas échéant polyphasique. L'analyse de la distance inter-images permet de définir un temps de corrélation temporelle du champ électromagnétique, sans toutefois nécessiter d'en passer par une analyse de Fourier.

Selon une autre caractéristique avantageuse, l'étape consistant à analyser les grains de speckle comprend une étape consistant à analyser une partie de la superficie desdites images dudit échantillonnage spatial, et selon une autre caractéristique, ladite partie de la superficie desdites images dudit échantillonnage spatial est égale à la surface d'un grain de speckle.

Cette caractéristique permet grâce à un passage dans l'espace des fréquences, de type Fourier, ondelettes, d'obtenir un spectre des décalages Doppler, et une caractérisation des mouvements de la structure microscopique du milieu diffusant via le coefficient de diffusion ou vitesse quadratique moyenne. Il permet de manière alternative de calculer le diamètre des particules.

Selon une autre caractéristique avantageuse, le procédé selon l'invention consiste à déterminer la direction et la vitesse de migration d'ensemble des grains de speckle.

Cette caractéristique est issue de l'analyse distance inter-images. Si l'on prend en compte un mouvement dans le milieu diffusant, la direction de ce mouvement correspond par exemple à celle d'un produit chimique qui se déplace, coule, etc... Ainsi, avec cette analyse, on obtient deux mesures : le temps de corrélation et une éventuelle direction et vitesse de mouvement

Selon une autre caractéristique avantageuse, l'étape consistant à projeter une lumière cohérente vers ledit milieu diffusant consiste à projeter un faisceau lumineux dont le diamètre est inférieur au libre parcours de transport optique 1* du milieu diffusant.

Cette caractéristique permet d'obtenir un signal sous la forme d'une pluralité de photos, représentant un échantillonnage spatial à des instants successifs dans un objectif déterminé.

Selon une autre caractéristique avantageuse de la précédente, l'étape consistant à analyser les grains de speckle comprend une étape consistant à effectuer une auto-corrélation spatiale des images successives, et selon une autre caractéristique avantageuse, le procédé selon l'invention consiste à déterminer le profil de la tache de rétrodiffusion.

Cette caractéristique permet de calculer l'inter-corrélation spatiale de chaque image avec elle-même. On obtient ainsi une autre image qui aura en son centre le grain de speckle moyen. La transformée de Fourier donne une relation entre la taille et la forme de ce grain moyen et la taille et la forme de la pupille émettrice de lumière, en l'occurrence la tache de rétrodiffusion. On dispose donc ici d'un moyen nouveau d'accéder à la tache de rétrodiffusion sans optique d'imagerie mais à condition de produire cette tache par une injection fine appropriée de lumière cohérente telle que définie ci-dessus.

Selon une autre caractéristique avantageuse, le procédé selon l'invention consiste à analyser l'évolution de la forme de ladite tache de rétrodiffusion en vue de déterminer la probabilité du nombre de diffusion.

Cette caractéristique permet, par l'obtention du coefficient de diffusion ou vitesse quadratique moyenne, d'obtenir une caractérisation des mouvements de la structure microscopique du milieu diffusant ou le diamètre des particules.

Selon une autre caractéristique avantageuse, le procédé selon l'invention consiste à analyser l'évolution de la taille de ladite tache de rétrodiffusion en vue de déterminer le libre parcours de transport optique 1* du milieu diffusant et son évolution.

Selon une caractéristique avantageuse, l'étape consistant à analyser les grains de speckle comprend une étape consistant à séparer les grains de speckle suivant le critère de taille et de brillance.

Une telle caractéristique permet de faire la distinction entre la vitesse de particules incluses dans et composant le milieu diffusant, par exemple proches de la surface de celui-ci, et la vitesse des particules plus éloignées de la surface.

L'invention se rapporte également à un dispositif de détection et d'analyse du mouvement dans un milieu diffusant selon l'objet de la revendication 11.

D'autres caractéristiques et avantages apparaîtront à la lecture qui suit de plusieurs exemples de mode de réalisation de procédés et dispositifs selon l'invention, accompagnée des dessins annexés, exemples donnés à titre illustratif non limitatif
La figure 1 représente un exemple d'application du procédé selon l'invention, dans laquelle la figure la est une représentation des grains de speckle et la figure 1b un diagramme issu de l'analyse des grains de speckle.
La figure 2 représente une vue schématique d'un exemple de mode de réalisation d'un dispositif d'analyse du mouvement dans un milieu diffusant, selon l'invention.

Un premier exemple de mode de réalisation d'un procédé de détection et d'analyse du mouvement dans un milieu diffusant consiste à :
- projeter une lumière cohérente vers ledit milieu diffusant, en injectant un faisceau laser de telle sorte que l'impact de tous les rayons avec la surface du milieu diffusant couvre une surface non nécessairement petite par rapport à la longueur de transport optique 1* du milieu diffusant ;
- effectuer un échantillonnage spatial et temporel du champ électromagnétique de la lumière diffusée par ledit milieu diffusant, en transmission ou en rétrodiffusion selon les besoins, en vue d'obtenir une pluralité d'images dudit champ électromagnétique, cette étape pouvant être effectuée au moyen d'un capteur matriciel à partir duquel une pluralité d'images successives pourra être recueillies, enregistrées ou non dans une mémoire selon la nécessité, par exemple selon que l'on peut traiter en temps réel ou non les données ; chaque image est un échantillonnage spatial de l'intensité du champ électromagnétique ; le film constituant un échantillonnage temporel de l'évolution du champ électromagnétique au cours du temps ; il est ainsi possible de concevoir ce signal comme un ensemble de données, chaque donnée étant codée dans un espace à trois dimensions, à savoir deux dimensions X, Y spatiales et une dimension temps ;
- analyser les grains de speckle issus des images obtenues à partir de l'échantillonnage spatial et temporel du champ électromagnétique de la lumière diffusée, en vue de détecter et analyser un mouvement dans ledit milieu diffusant. L'analyse des grains de speckle est fonction du milieu diffusant analysé et de l'objectif de l'analyse ; plusieurs exemples d'analyse sont donnés ci-dessous en fonction d'exemples d'application particulières du procédé selon l'invention.

Concernant l'analyse des grains de speckle, et dans le cas de la relation spatiale, il y a lieu d'indiquer que lorsqu'on injecte une onde de lumière cohérente dans un milieu diffusant, on peut déterminer certaines caractéristiques spatiales du champ électromagnétique à une distance d du milieu diffusant. Tout d'abord, on a en général un milieu diffusant se présentant sous la forme d'un volume, ce qui rend possible l'hypothèse que la phase de l'onde arrivant au point d'impact sur les moyens d'échantillonnage présentera toutes les valeurs possibles, soit de 0 à 2π. On obtient ainsi une figure de speckle pleinement développée, c'est à dire avec un contraste maximal. De plus, en l'absence d'optique influençant la propagation de la lumière entre la tache de diffusion et le capteur de mesure, l'auto-corrélation spatiale de la figure de speckle est la transformée de Fourier de l'auto-corrélation spatiale de la pupille émettrice de lumière, c'est à dire dans notre cas la tache de rétrodiffusion.

Concernant l'analyse des grains de speckle, et dans le cas de la relation temporelle, il y a lieu d'indiquer que la figure de speckle est en fait la figure d'interférence produite par le milieu diffusant vu comme un interféromètre. Dans le cas où la structure microscopique du milieu diffusant analysé est mouvante, la figure de speckle le sera aussi. Pine et Maret par exemple ont publié comment relier le mouvement des particules avec les variations du champ électromagnétique en un point de l'espace ; plus précisément, ils montrent comment, à partir d'un modèle de mouvement de particules, on peut calculer la fonction d'auto-corrélation temporelle du champ électromagnétique en un point. Cela nécessite un grand nombre d'acquisitions successives rendues nécessaires à la minimisation du bruit, entraînant une mesure longue à effectuer, interdit de ce fait l'analyse de produit dont les caractéristiques de vitesse changent rapidement au cours du temps.

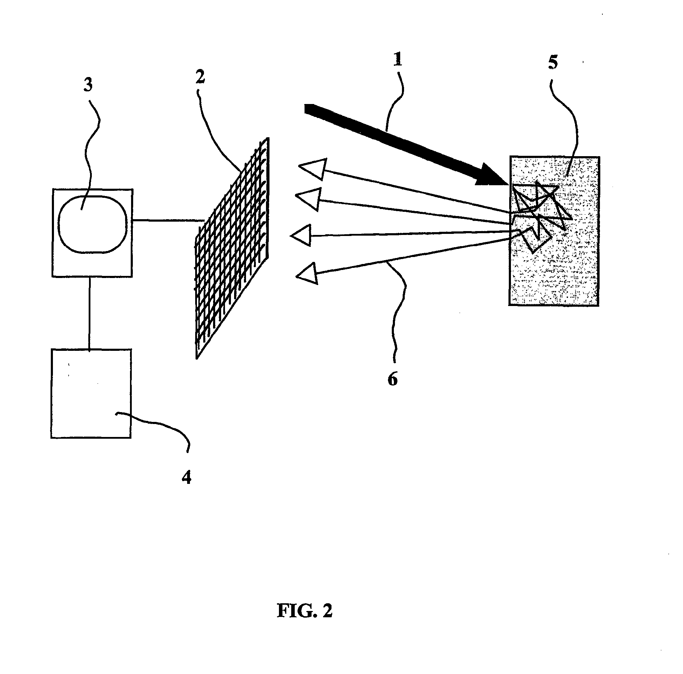

L'étape d'analyse des grains de speckle comprend une étape consistant à analyser la distance inter-images. Cette méthode permet d'accéder à une mesure d'agitation du speckle en quelques images seulement, autorisant par exemple à suivre des produits qui sèchent très rapidement. Deux images peuvent être vues comme deux points dans un espace vectoriel dont la dimension correspond au nombre de pixels du capteur matriciel utilisé. En considération de ceci, on peut définir une distance vectorielle entre ces deux images : par exemple, comme expliqué plus loin avec la figure 2 qui représente un exemple d'application du procédé selon l'invention, on définit la distance D2 qui est la racine carrée de la somme des carrés des différences entre deux valeurs de l'intensité lumineuse de deux pixels de même position dans chaque image ; comme autre exemple, on peut définir la distance D1 qui est la valeur absolue de la somme des valeurs absolues des différences pixel à pixel, à l'instar de la distance D2. Ensuite, on sélectionne une image particulière dans le film, ce qui correspond donc à un temps donné. On calcule alors la distance de toutes les images successives par rapport à cette image sélectionnée. La courbe obtenue commence bien sûr vers zéro car la deuxième image est celle qui ressemble le plus à l'image de référence. Elle convergera vers une valeur particulière que l'on peut définir comme la distance entre deux images totalement différentes ou décorrélées. L'analyse de cette courbe permettra de définir un temps de corrélation temporelle de notre champ électromagnétique mais cette fois sans analyse de Fourier.

L'analyse des grains de speckle peut comprendre une étape consistant à analyser la superficie totale des images de l'échantillonnage spatial. On exploite par cette analyse la propriété d'ergodicité du champ électromagnétique. Il y a lieu de noter que l'on ne réduit pas le bruit par un facteur égal à la racine carrée du nombre de pixel (dans le cas d'utilisation d'un capteur matriciel), mais par un facteur égal à la racine carrée du nombre de grains de speckle. En effet, l'indépendance statistique est valable d'un grain de speckle à l'autre mais pas d'un pixel à l'autre.

Un premier exemple d'analyse des grains de speckle peut comprendre d'une manière alternative au paragraphe ci-dessus, une étape consistant à analyser une partie de la superficie des images de l'échantillonnage spatial, par exemple égale à la surface d'un grain de speckle, notamment après une analyse conforme à l'analyse des grains de speckle décrite plus haut.

Il y a lieu de noter qu'il est possible d'effectuer une analyse de la similitude entre au moins deux des images. Par exemple, un opérateur a fait subir une action quelconque au milieu diffusant qu'il analyse ; grâce à l'analyse de similitude entre les images des grains de speckle avant et après l'intervention, il peut dire si la microstructure du milieu diffusant a évolué ou non. Toute fonction similitude entre deux images est utilisable, par exemple, la fonction distance entre deux images déjà citée. Il y a lieu de rappeler que la microstructure concernée dans l'exemple est la répartition des indices optiques, réels et imaginaires, dans l'espace.

Un deuxième exemple de mode de réalisation d'un procédé de détection et d'analyse du mouvement dans un milieu diffusant consiste à :
- projeter une lumière cohérente vers ledit milieu diffusant, en injectant avantageusement un faisceau laser dont le diamètre est inférieur à 1*, c'est à dire au libre parcours de transport optique du milieu diffusant ;
- effectuer un échantillonnage spatial et temporel du champ électromagnétique de la lumière diffusée par le milieu diffusant comme pour le premier exemple de mode de réalisation d'un procédé selon l'invention décrit ci-dessus ;
- analyser les grains de speckle issus des images obtenues à partir de l'échantillonnage spatial et temporel du champ électromagnétique de la lumière diffusée, en vue de détecter et analyser un mouvement dans ledit milieu diffusant, en effectuant avantageusement une auto-corrélation spatiale des images successives. On a expliqué plus haut ce qu'était l'auto-corrélation spatiale des images successives qui permet d'accéder par un moyen nouveau au profil de la tache de rétrodiffusion sans optique d'imagerie. L'auto-corrélation spatiale d'une image de speckle dans le cas d'une injection fine du laser, permet de connaître la probabilité du nombre de diffusions et ainsi d'accéder au coefficient de diffusion de particules ou à la vitesse quadratique moyenne de particules. Il faut pour cela une mesure de mouvement de speckle qui est réalisée grâce à la distance inter-image. Grâce à la courbe d'évolution de la tache de rétrodiffusion, on peut obtenir de manière connue une mesure de l'évolution de 1* au cours du temps, par exemple dans le cas d'application d'un milieu diffusant à un produit chimique non absorbant (blanc), ou à un produit dont on connaît l'absorption. On peut ainsi de manière connue également, accéder à la taille moyenne des particules diffusantes dans le milieu diffusant le cas échéant, en exploitant le modèle de Stokes-Einstein qui permet de calculer le diamètre à partir du coefficient de diffusion des particules, ou accéder à la mesure de la capacité de diffusion de la lumière d'un produit, qui est représenté par la mesure de 1* : ce chiffre peut permettre par exemple de donner le pouvoir de couverture ou d'opacité d'une peinture.

La connaissance du profil de la tache de rétrodiffusion permet l'analyse de l'évolution de la forme de la tache de rétrodiffusion en vue de déterminer la probabilité du nombre de diffusion. Une fois injecté dans le milieu diffusant dont on cherche à analyser le mouvement, chaque photon, dans un modèle classique corpusculaire de la lumière, va subir un certain nombre de diffusions avant de ressortir par l'interface où il est entré. Un grand nombre de photons va subir quelques diffusions pour ressortir immédiatement, la partie centrale de la tache étant en effet très brillante. Un petit nombre d'entre eux va subir un grand nombre de diffusions. La connaissance de la fonction probabilité du nombre de diffusions associée à un modèle du mouvement des structures diffusantes permet de calculer de manière quantitative le mouvement des particules et permet d'exploiter la mesure de variation électromagnétique obtenue grâce à l'analyse utilisant la distance inter-image. Si l'on compare la mesure obtenue de la fonction d'auto-corrélation temporelle selon un procédé suivant l'invention, avec celle obtenue par un modèle conventionnel soit de diffusion de particules soit d'un mouvement de convection de particules, il est possible d'obtenir les paramètres principaux de ces modèles, c'est à dire les coefficients de diffusion de particules et vitesse quadratique moyenne des particules. On accède ainsi à deux paramètres physiques importants en hydrodynamique des fluides.

En se référant maintenant au premier exemple de mode de réalisation d'un procédé selon l'invention décrit plus haut, les exemples décrits d'analyse des grains de speckle permettent comme on l'a vu d'obtenir un temps de corrélation optique qui est le temps nécessaire pour que le champ électromagnétique soit décorrélé avec lui-même. L'inverse de ce temps donne une mesure de la vitesse d'agitation du milieu diffusant analysé. On peut ainsi par exemple appliquer de tels procédés à l'analyse de la sédimentation de particules, au séchage de produit, à la propagation d'un liquide dans une structure poreuse, et également au calcul du coefficient de diffusion. En effet, une peinture qui sèche par exemple, est une solution de particules dans un solvant qui s'évapore ; l'agitation brownienne de ces particules va ralentir à mesure que le solvant disparaît ; on suit ainsi ce ralentissement grâce au procédé selon l'invention et ainsi on obtient une courbe de séchage, fonction du temps. Relativement à la propagation d'un liquide dans une structure poreuse, le paramètre physique qui change est l'indice optique. En effet, un liquide qui se propage dans une structure poreuse, par exemple de l'eau qui mouille du papier, va remplacer progressivement les zones occupées par de l'air (indice = 1) par des zones occupées par de l'eau (indice = 1,33) ou tout autre liquide. Dans ce cas, le procédé selon l'invention permet d'exploiter le mouvement des grains de speckle par les algorithmes de traitement du signal décrits plus haut.

Toujours en référence au premier exemple de mode de réalisation d'un procédé selon l'invention décrit plus haut, l'analyse distance inter-images, qui permet d'aboutir également au temps de corrélation optique, mais aussi à la direction et vitesse de migration d'ensemble des grains de speckle, comme expliqué ci-dessous, trouve par exemple application à l'étude du coulage des milieux diffusants en mesurant à partir de l'algorithme de mesure de la direction et la vitesse des grains de speckle, une vitesse de coulage d'une peinture par exemple, ou encore à l'analyse de la migration de particules incluses dans un milieu diffusant et en partie constitutives de celui-ci, ou encore à l'analyse de la diffusion de particules dans un réseau aléatoire, pour ces deux dernières applications avec la possibilité de séparer les grains de speckle suivant le critère (taille, brillance) comme expliqué plus loin. Pour mesurer une direction et une vitesse des grains de speckle, on peut utiliser la distance inter-images de la manière suivante : on calcule cette distance entre une première image et une deuxième mais en ayant décalé la deuxième image de un à plusieurs pixels dans toutes les directions possibles. Le décalage qui donne la distance minimale nous donne un vecteur. La direction et la norme de ce vecteur nous donnent la direction et la vitesse de déplacement moyen des grains de speckle. L'étude de la migration des particules est réalisée à partir de l'algorithme de mesure de la direction et vitesse des grains de speckle, mesure de la vitesse d'ensemble de particules qui se déplacent sans mouvement ordonné les unes par rapport au autres. L'étude de la diffusion de particules dans un réseau aléatoire est réalisée à partir de l'algorithme de mesure de la direction et vitesse des grains de speckle et aussi de l'algorithme de mesure des déplacements aléatoires des grains de speckle, le procédé selon l'invention permettant en outre de mesurer le mouvement de particules qui se déplacent dans une structure aléatoire fixe, ou structure poreuse, par exemple des particules d'encre qui se diffusent dans du papier.

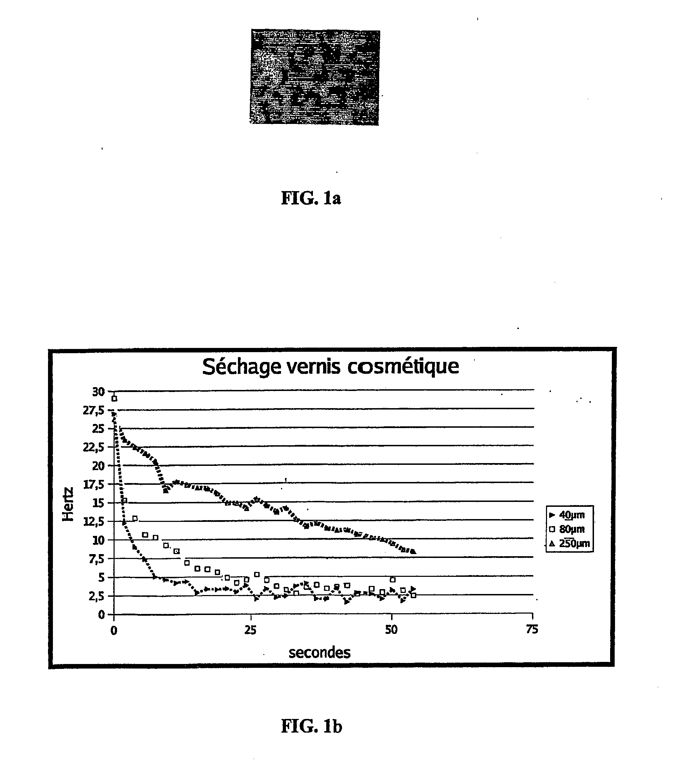

La figure 1b représente un exemple de courbe de séchage de peinture ou vernis obtenue à partir du traitement de signal : distance inter-images D2 décrit plus haut. En ordonnée, on a placé l'inverse du temps de corrélation en hertz, en abscisse le temps en secondes. On constate une décélération du mouvement des particules dans le milieu diffusant due à l'évaporation du solvant qui entraîne une augmentation de la viscosité et ainsi une diminution du coefficient de diffusion des particules. Les trois courbes correspondent à des épaisseurs différentes de couche du milieu diffusant. On constate bien que plus la couche est épaisse, plus le milieu met de temps pour sécher, c'est à dire à avoir ses particules immobiles.

Un autre exemple d'analyse des grains de speckle applicable au deuxième exemple de procédé décrit plus haut peut comprendre en outre une étape consistant à séparer les grains de speckle suivant le critère de taille et de brillance. Un exemple d'application de ce type d'analyse est l'analyse du mouvement dans une peinture qui sèche en formant une croûte. Le procédé permet de faire la distinction entre la vitesse des particules qui sont proches de la surface et la vitesse des particules plus éloignées de cette surface. Pour cela, rappelons que lorsqu'on injecte de la lumière sur la surface d'un milieu diffusant, il se forme une tache de rétrodiffusion ; on sait que le centre de la tache très lumineux et de diamètre réduit (de l'ordre de 1*) émet essentiellement des "photons courts", c'est à dire des photons qui ont pénétré le milieu sur une faible profondeur (profondeur de l'ordre de 1*) ; on sait aussi par conséquent que le bord de la tache qui est peu lumineux et de grand diamètre (de l'ordre de 10 à 100 fois 1*) émet essentiellement des "photons longs", c'est à dire des photons qui ont pénétré le milieu sur une grande profondeur (profondeur de l'ordre de 10 à 100 fois 1*) ; il y a lieu d'indiquer qu'une petite tache brillante créera des grains de speckle de grande taille et brillants. Inversement, une grande tache peu brillante va créer des grains de speckle de petite taille et peu brillants. On en déduit que l'observation séparée des grains brillants et de grande taille et des grains peu brillants et de petite taille va permettre de mesurer séparément la vitesse de déplacement de la structure microscopique du milieu diffusant en surface et en profondeur. L'exemple d'application décrit ci-dessus vient confirmer ceci : pour une peinture qui sèche et forme une croûte en surface, on observe au départ tous les grains de speckle en mouvement, puis petit à petit, on observe que les gros grains brillants s'immobilisent avant les petits grains moins lumineux. En fin d'expérience, on observe un arrêt de tous les grains de speckle. On en déduit donc que la peinture sèche d'abord en surface puis en profondeur. On peut donc envisager un traitement de signal qui va séparer des catégories de grains par le critère (taille, brillance), les petits grains sombres des gros grains brillants et autres catégories intermédiaires. On peut ainsi fabriquer autant de nouveaux films par catégorie. Sur chaque catégorie, on pourra à nouveau appliquer des traitements, par exemple comme indiqués plus loin, et obtenir ainsi non plus une mesure unique mais un histogramme de mesures.

La figure 2 représente un schéma fonctionnel d'un exemple de dispositif de détection et d'analyse du mouvement dans un milieu diffusant, permettant de mettre en oeuvre un procédé selon l'invention de détection et d'analyse du mouvement dans un milieu diffusant. Le dispositif comprend :
- des moyens 1 de projection d'une lumière cohérente vers le milieu diffusant 5, par exemple un faisceau laser, soit par un laser classique, soit par une diode laser, apte à injecter dans le milieu diffusant à analyser un faisceau dont les rayons au point d'impact sont inférieur à 1* ou de l'ordre de grandeur de 1*.
- des moyens 2 de capteur matriciel aptes à permettre la réalisation d'un échantillonnage spatial et temporel du champ électromagnétique de la lumière diffusée 6 par le milieu diffusant, en vue d'obtenir une pluralité d'images du champ électromagnétique, par exemple un capteur plan multi-pixels,
- des moyens 3 d'observation des images du champ électromagnétique de la lumière diffusée, par exemple un moniteur permettant de fournir une représentation imagée du champ électromagnétique
- des moyens 4 d'analyse des grains de speckle issus des images, qui sont constitués de moyens de calcul permettant d'effectuer les analyses des grains de speckle décrites plus haut. Les moyens de calcul seront avantageusement mis en oeuvre par un programme d'ordinateur, ou par une réalisation en logique câblée, par exemple FPGA ou ASIC, ou par des composants embarqués par exemple de type microprocesseur, et comporteront selon les besoins des moyens de séparation des grains de speckle suivant le critère de taille et de brillance, des moyens d'analyse d'une partie de la superficie des images du capteur matriciel, des moyens d'analyse de la surface d'un grain de speckle, des moyens d'analyse de la distance inter-images, des moyens de calcul de la direction et de la vitesse de migration d'ensemble des grains de speckle, des moyens pour effectuer une auto-corrélation spatiale des images successives, des moyens de détermination du profil de la tache de rétrodiffusion, des moyens d'analyse de l'évolution de la forme de la tache de rétrodiffusion en vue de déterminer la probabilité du nombre de diffusion, des moyens d'analyse de l'évolution de la taille de la tache de rétrodiffusion en vue de déterminer le libre parcours de transport optique 1* du milieu diffusant.

## Revendications

1. Procédé de détection et d'analyse du mouvement dans un milieu diffusant, consistant à :
- projeter une lumière cohérente vers ledit milieu diffusant,
- effectuer un échantillonnage spatial et temporel du champ électromagnétique de la lumière diffusée par ledit milieu diffusant au moyen d'un capteur matriciel, en vue d'obtenir une pluralité d'images dudit champ électromagnétique,
- analyser les grains de speckle issus desdites images obtenues à partir dudit échantillonnage spatial et temporel du champ électromagnétique de la lumière diffusée, en vue de détecter et analyser un mouvement dans ledit milieu diffusant,
***caractérisé en ce que*** l'étape consistant à analyser les grains de speckle comprend une étape consistant à analyserla courbe d'évolution de la distance vectorielle inter-images en considérant chaque image comme un point dans un espace vectoriel dont la dimension correspond au nombre de pixels du capteur matriciel.

2. Procédé suivant la revendication 1, ***caractérisé en ce que*** l'étape consistant à analyser les grains de speckle comprend une étape consistant à analyser une partie de la superficie desdites images dudit échantillonnage spatial.

3. Procédé suivant la revendication 2, ***caractérisé en ce que*** ladite partie de la superficie desdites images dudit échantillonnage spatial est égale à la surface d'un grain de speckle.

4. Procédé suivant l'une quelconque des revendications 1 à 3, ***caractérisé en ce qu**'il* consiste à déterminer la direction et la vitesse de migration d'ensemble des grains de speckle.

5. Procédé suivant la revendication 1, ***caractérisé en ce que*** l'étape consistant à projeter une lumière cohérente vers ledit milieu diffusant consiste à projeter un faisceau lumineux dont le diamètre est inférieur au libre parcours **(1*)** de transport optique du milieu diffusant.

6. Procédé suivant la revendication 5, ***caractérisé en ce que*** l'étape consistant à analyser les grains de speckle comprend une étape consistant à effectuer une auto-corrélation spatiale des images successives.

7. Procédé suivant la revendication 6, ***caractérisé en ce qu'***il consiste à déterminer le profil de la tache de rétrodiffusion.

8. Procédé suivant la revendication 7, ***caractérisé en ce qu**'*il consiste à analyser l'évolution de la forme de ladite tache de rétrodiffusion en vue de déterminer la probabilité du nombre de diffusion.

9. Procédé suivant la revendication 7, ***caractérisé en ce qu'***il consiste à analyser l'évolution de la taille de ladite tache de rétrodiffusion en vue de déterminer le libre parcours de transport optique (1*) du milieu diffusant et son évolution.

10. Procédé suivant la revendication 5, ***caractérisé en ce que*** l'étape consistant à analyser les grains de speckle comprend une étape consistant à séparer les grains de speckle suivant le critère de taille et de brillance.

11. Dispositif de détection et d'analyse du mouvement dans un milieu diffusant, ***caractérisé en ce qu'***il comprend :
- des moyens (1) de projection d'une lumière cohérente vers ledit milieu diffusant (5),
- des moyens (2) de capteur matriciel aptes à permettre la réalisation d'un échantillonnage spatial et temporel du champ électromagnétique de la lumière diffusée (6) par ledit milieu diffusant, en vue d'obtenir une pluralité d'images dudit champ électromagnétique,
- des moyens (3) d'observation desdites images du champ électromagnétique de la lumière diffusée,
- des moyens d'analyse (4) des grains de speckle issus desdites images,
- des moyens d'analyse de la courbe d'évolution de la distance vectorielle inter-images en considérant chaque image comme un point dans un espace vectoriel dont la dimension correspond au nombre de pixels du capteur matriciel.

12. Dispositif suivant la revendication 11*, **caractérisé en ce qu'***il comprend des moyens d'analyse d'une partie de la superficie desdites images dudit échantillonnage spatial.

13. Dispositif suivant la revendication 12, ***caractérisé en ce qu***'il comprend des moyens d'analyse de la surface d'un grain de speckle.

14. Dispositif suivant l'une quelconque des revendications 11 à 13, ***caractérisé en ce qu*'**il comprend des moyens de calcul de la direction et de la vitesse de migration d'ensemble des grains de speckle.

15. Dispositif suivant l'une quelconque des revendications 11 à 14, ***caractérisé en ce qu**'il* comprend des moyens de projection d'un faisceau lumineux dont le diamètre est inférieur au libre parcours de transport optique du milieu diffusant (1*).

16. Dispositif suivant la revendication 15, ***caractérisé en ce qu***'il comprend des moyens pour effectuer une auto-corrélation spatiale des images successives.

17. Dispositif suivant la revendication 16, ***caractérisé en ce qu'***il comprend des moyens de détermination du profil de la tache de rétrodiffusion.

18. Dispositif suivant la revendication 17, ***caractérisé en ce qu***'il comprend des moyens d'analyse de l'évolution de la forme de ladite tache de rétrodiffusion en vue de déterminer la probabilité du nombre de diffusion.

19. Dispositif suivant la revendication 17, ***caractérisé en ce qu***'il comprend des moyens d'analyse de l'évolution de la taille de ladite tache de rétrodiffusion en vue de déterminer le libre parcours de transport optique (1*) du milieu diffusant.

20. Dispositif suivant l'une quelconque des revendications 15 à 19,, ***caractérisé en ce qu***'il comprend des moyens de séparation des grains de speckle suivant le critère de taille et de brillance.

## Patentansprüche

1. Verfahren zum Nachweis und zur Analyse einer Bewegung in einem streuenden Medium mit:
- Projizieren eines kohärenten Lichtes in Richtung des streuenden Mediums,
- Bewirken einer räumlichen und zeitlichen Abtastung des elektromagnetischen Feldes des durch das streuende Medium gestreutes Lichtes mittels eines Matrizensensors, um eine Mehrzahl von Bildern des elektromagnetischen Feldes zu erhalten,
- Analysieren der Fleckenkörner, die aus den erhaltenen Bildern anhand der räumlichen und zeitlichen Abtastung des elektromagnetischen Feldes des gestreuten Lichtes entstanden sind, im Hinblick darauf eine Bewegung in dem streuenden Medium nachzuweisen und zu analysieren,
**dadurch gekennzeichnet,**
**dass** die Stufe, die aus dem Analysieren der Fleckenkörner besteht, eine Stufe enthält, die aus dem Analysieren der Entwicklungskurve des vektoriellen Abstandes der Zwischenbilder besteht, wobei jedes Bild als ein Punkt in einem Vektorraum angesehen wird, dessen Dimension der Anzahl von Pixeln des Matrizensensors entspricht.

2. Verfahren nach Anspruch 1,
**dadurch gekennzeichnet,**
**dass** die Stufe, die aus dem Analysieren der Fleckenkörner besteht, eine Stufe enthält, die aus dem Analysieren eines Teils der Oberfläche der Bilder der räumlichen Abtastung besteht.

3. Verfahren nach Anspruch 2,
**dadurch gekennzeichnet,**
**dass** der Teil der Fläche der Bilder der räumlichen Abtastung gleich ist der Oberfläche eines Fleckenkorns.

4. Verfahren nach einem der Ansprüche 1 bis 3,
**dadurch gekennzeichnet,**
**dass** es aus dem Bestimmen der Richtung und der Wanderungsgeschwindigkeit der Fleckenkörner besteht.

5. Verfahren nach Anspruch 1,
**dadurch gekennzeichnet,**
**dass** die Stufe, die aus dem Projizieren eines kohärenten Lichtes in Richtung des streuenden Mediums besteht, aus dem Projizieren eines Lichtstrahls besteht, wovon der Durchmesser kleiner ist als der freie Verlauf (1*) des optischen Transports des streuenden Mediums.

6. Verfahren nach Anspruch 5,
**dadurch gekennzeichnet,**
**dass** die Stufe, die aus dem Analysieren der Fleckenkörner besteht, eine Stufe enthält, die aus dem Bewirken einer räumlichen Autokorrelation der aufeinander folgenden Bilder besteht.

7. Verfahren nach Anspruch 6,
**dadurch gekennzeichnet,**
**dass** es aus dem Bestimmen des Profils des Rückdiffusionsflecks besteht.

8. Verfahren nach Anspruch 7,
**dadurch gekennzeichnet,**
**dass** es aus dem Analysieren der Entwicklung der Form des Rückdiffusionsflecks im Hinblick auf die Bestimmung der Wahrscheinlichkeit der Diffusionszahl besteht.

9. Verfahren nach Anspruch 7,
**dadurch gekennzeichnet,**
**dass** es aus dem Analysieren der Größe des Rückdiffusionsflecks im Hinblick auf die Bestimmung des freien Verlaufs des optischen Transports (1*) des streuenden Mediums und seiner Entwicklung besteht.

10. Verfahren nach Anspruch 5,
**dadurch gekennzeichnet,**
**dass** die Stufe, die aus dem Analysieren der Fleckenkörner besteht, eine Stufe enthält, die aus dem Trennen der Fleckenkörner nach dem Kriterium der Größe und der Helligkeit besteht.

11. Vorrichtung zum Nachweis und zur Analyse einer Bewegung in einem streuenden Medium,
**dadurch gekennzeichnet, dass** sie enthält:
- Mittel (1) zum Projizieren eines kohärenten Lichtes in Richtung auf das streuende Medium (5),
- Matrizensensormittel (2), die geeignet sind, die Realisierung einer räumlichen und zeitlichen Abtastung des elektromagnetischen Feldes des durch das streuende Medium gestreuten Lichtes zu erlauben, um eine Mehrzahl von Bildern des elektromagnetischen Feldes zu erhalten,
- Mittel (3) zum Beobachten der Bilder des elektromagnetischen Feldes des gestreuten Lichtes,
- Mittel (4) zum Analysieren der Fleckenkörner, die von den Bildern stammen,
- Mittel zum Analysieren der Entwicklungskurve des vektoriellen Abstands der Zwischenbilder, wobei jedes Bild als ein Punkt in einem Vektorraum angesehen wird, dessen Dimension der Anzahl der Pixel des Matrizensensors entspricht.

12. Vorrichtung nach Anspruch 11,
**dadurch gekennzeichnet,**
**dass** sie Mittel zur Analyse eines Teils der Fläche der Bilder der räumlichen Abtastung aufweist.

13. Vorrichtung nach Anspruch 12,
**dadurch gekennzeichnet,**
**dass** sie Mittel zur Analyse der Oberfläche eines Fleckenkorns aufweist.

14. Vorrichtung nach einem der Ansprüche 11 bis 13,
**dadurch gekennzeichnet,**
**dass** sie Mittel zum Berechnen der Richtung und der Wanderungsgeschwindigkeit der Fleckenkörner aufweist.

15. Vorrichtung nach einem der Ansprüche 11 bis 14,
**dadurch gekennzeichnet,**
**dass** sie Mittel zum Projizieren eines Lichtstrahls aufweist, dessen Durchmesser kleiner ist als der freie Verlauf des optischen Transport des streuenden Mediums (1*).

16. Vorrichtung nach Anspruch 15,
**dadurch gekennzeichnet,**
**dass** sie Mittel zum Bewirken einer räumlichen Autokorrelation der aufeinander folgenden Bilder aufweist.

17. Vorrichtung nach Anspruch 16,
**dadurch gekennzeichnet,**
**dass** sie Mittel zum Bestimmen des Profils des Rückdiffusionsflecks aufweist.

18. Vorrichtung nach Anspruch 17,
**dadurch gekennzeichnet,**
**dass** sie Mittel zur Analyse der Entwicklung der Form des Rückdiffusionsflecks im Hinblick auf die Bestimmung der Wahrscheinlichkeit der Diffusionszahl aufweist.

19. Vorrichtung nach Anspruch 17,
**dadurch gekennzeichnet,**
**dass** sie Mittel zur Analyse der Entwicklung der Größe des Rückdiffusionsflecks im Hinblick auf die Bestimmung des freien Verlaufs des optischen Transports (1*) des streuenden Mediums aufweist.

20. Vorrichtung nach einem der Ansprüche 15 bis 19,
**dadurch gekennzeichnet,**
**dass** sie Mittel zur Trennung der Fleckenkörner nach dem Kriterium der Größe und der Helligkeit aufweist.

## Claims

1. Method for the detection and analysis of movement in a scattering medium, consisting of:
- projecting a coherent light towards the said scattering medium,
- performing a spatial and temporal sampling of the electromagnetic field of the light scattered by the scattering medium by means of a matrix sensor, in order to obtain a plurality of images of the said electromagnetic field,
- analysing the speckle grains resulting from the images obtained from the said spatial and temporal sampling of the electromagnetic field of the scattered light, in order to detect and analyse a movement in the said scattering medium,
**characterised in that** the said speckle grain analysis step comprises a step consisting of analysing the curve of evolution of the inter-image vector distance by considering each image as a point in a vector space of which the size corresponds to the number of pixels of the matrix sensor.

2. Method according to claim 1, **characterised in that** the step consisting of analysing the speckle grains comprises a step consisting in analysing part of the surface area of the said images of the said spatial sampling.

3. Method according to claim 2, **characterised in that** the said part of the surface area of the said images of the said spatial sampling is equal to the surface of a speckle grain.

4. Method according to any one of claims 1 to 3, **characterised in that** it consists of determining the direction and speed of migration of the speckle grains.

5. Method according to claim 1, **characterised in that** the step consisting of projecting a coherent light towards the said scattering medium comprises projecting a light beam having a diameter less than the free optical path length (1*) of the scattering medium.

6. Method according to claim 5, **characterised in that** the step consisting of analysing the speckle grains comprises a step consisting in performing a spatial auto-correlation of the said successive images.

7. Method according to claim 6, **characterised in that** it consists of determining the profile of the backscattering spot.

8. Method according to claim 7, **characterised in that** it consists of analysing the evolution of the shape of the said backscattering spot in order to determine the probability of the scattering number.

9. Method according to claim 7, **characterised in that** it consists of analysing the evolution of the size of the said backscattering spot in order to determine the free optical path length (1*) of the scattering medium and its evolution.

10. Method according to claim 5, **characterised in that** the step consisting of analysing the speckle grains comprises a step consisting in separating the speckle grains according to the criterion of size and brightness.

11. Device for the detection and analysis of movement in a scattering medium, **characterised in that** it comprises:
- means (1) for projecting a coherent light towards the said scattering medium (5),
- matrix sensor means (2) which can be used to perform a spatial and temporal sampling of the electromagnetic field of the light (6) scattered by the said scattering medium, in order to obtain a plurality of images of the said electromagnetic field,
- means (3) for observing the said images of the electromagnetic field of the scattered light,
- means (4) for analysing the speckle grains resulting from the said images,
- means for analysing the curve of evolution of the vector distance by considering each image as a point in a vector space of which the size corresponds to the number of pixels of the matrix sensor.

12. Device according to claim 11, **characterised in that** it comprises means for analysing part of the surface area of the said images of the said spatial sampling.

13. Device according to claim 12, **characterised in that** it comprises means for analysing the surface area of a speckle grain.

14. Device according to any one of claims 11 to 13, **characterised in that** it comprises means for calculating the direction and speed of migration of the speckle grains.

15. Device according to any one of claims 11 to 14, **characterised in that** it comprises means for projecting a light beam having a diameter less than the free optical path length of the scattering medium (1*).

16. Device according to claim 15, **characterised in that** it comprises means for performing a spatial auto-correlation of the successive images.

17. Device according to claim 16, **characterised in that** it comprises means for determining the profile of the backscattering spot.

18. Device according to claim 17, **characterised in that** it comprises means for analysing the evolution of the shape of the said backscattering spot in order to determine the probability of the scattering number.

19. Device according to claim 17, **characterised in that** it comprises means for analysing the evolution of the size of the said backscattering spot in order to determine the free optical path length (1*) of the scattering medium.

20. Device according to any one of claims 15 to 19, **characterised in that** it comprises means for separating the speckle grains according to the criterion of size and brightness.
